# EUROPEAN PATENT SPECIFICATION

(11) **EP 3 726 963 B1**
(45) Date of publication and mention of the grant of the patent: **03.08.2022**
(21) Application number: 18891451.9
(22) Date of filing: 21.12.2018
(51) Int. Cl.: A01G 31/02, A01G 31/06

(54) **BRACKET AND ASSEMBLY FOR RECEPTACLES IN AQUEOUS FARMING SYSTEM**
HALTER UND ANORDNUNG FÜR BEHÄLTER IN EINEM WÄSSRIGEN FARMSYSTEM
SUPPORT ET ENSEMBLE POUR RÉCEPTACLES DANS UN SYSTÈME D'AGRICULTURE AQUEUX

(30) Priority: 21.12.2017 US 201762608819 P
(43) Date of publication of application: 28.10.2020
(73) Proprietor: Proterra Ag, Inc., Commerce, CA 90040 (US)
(72) Inventor: GASMER, Morris, Whittier, California 90602 (US); GHALAMBOR, Hamid Reza, Whittier, California 90602 (US); RUSSELL, Kristopher, Whittier, California 90602 (US)
(74) Representative: Derry, Paul Stefan
(86) International application number: PCT/US2018/067296
(87) International publication number: WO 2019/126754

(56) References cited:
- WO-A1-2017/091772
- JP-U- H0 582 244
- KR-B1- 101 163 063
- US-A- 4 793 097
- US-A1- 2016 029 581
- US-A1- 2016 227 713

## Description

### FIELD OF THE INVENTION

The present invention relates generally to aqueous farming systems, and more particularly to a bracket useful in harvesting plants in aqueous farming systems.

### BACKGROUND

In aqueous farming a plant may be placed in an opening of a barrier. A root system of the plant is in an aqueous environment on one side of the barrier, and a canopy including the stem and leaves of the plant is exposed to an atmospheric environment on an opposing side of the barrier. The aqueous environment may be a liquid environment, as is the case for hydroponically grown crops, or a mist environment, as is the case for aeroponically grown crops. The barrier may be a floor or other construct, for example a mesh, or in some cases a wall or wall-like structure.

Removing a plant from the opening in the barrier without damaging fruits, vegetables and/or other portions of the plant canopy may be difficult. This may be especially true if a mechanical device may be used for harvesting operations.

JP H05 82244 U discloses a flowerpot stand for gardening.

US 4 793 097 A discloses a frame unit for protecting and maintaining a plurality of uniform plant containers therein as each container is affixed to the frame unit around the container upper extremity in sealed manner so that the plant container bottoms may rest on the earth's surface in normal disposition. The frame unit assures dead air space therebeneath while allowing container bottoms to rest directly on the ground. Each of the frame units includes a gripping means to enable manual movement in unison of plural plant containers, and each of the frame units includes sealing edge joinder means so that a plurality of frame units can be assembled into a frame array of preselected size wherein a much larger number of plant containers may be supported in operative position.

US 2016/029581 A1 discloses a grow plant enclosure to maximize plant density for a given growing area that has a perimeter frame, a first pane, and a second pane. The first pane is adjacently connected to the perimeter frame, while the second pane is removably attached to the perimeter frame opposite the first pane to form a hollow enclosure. A plurality of plug holder openings traverses through the first pane, and optionally the second pane, being designed to receive a plurality of plant holders for growing various plant types. A plurality of supply tubes traverse into the perimeter frame through a plurality of supply tube openings and each have a plurality of spray nozzles to deliver nutrient solution to the root zone of the plants retained in the plurality of plant holders. Excess nutrient solution is released through a drain fixture positioned about the bottom of the perimeter frame.

### BRIEF SUMMARY OF THE INVENTION

The claims define the matter for protection.

In accordance with some embodiments, an aqueous farm system includes a bracket for a plurality of plants. Each of the plants may be at least partially in a hole or opening in a barrier, with the plants removable from the holes through movement of the bracket. The bracket has a base with multiple holes or housings that each couple to a plant, with arms extending from the base. The arms may be grasped during harvesting operations so as to extract the plant from the holes in the barrier. In some embodiments the arms may extend a distance from the base sufficient to clear a crop canopy, allowing for the arms to be grasped without damaging parts of the canopy. In some embodiments the base extends sufficiently away from the plants such that the arms may extend from portions of the base away from the plants. In some other embodiments, the arms may include slots into which an end of a coupling shaft or pole may be inserted and engaged. The shafts or poles may then be used to move the bracket.

In accordance with the invention, the bracket has a base that extends along a longitudinal axis from a first end to a second end. Openings are defined through the base from a first surface of the base to a second surface of the base, the second surface substantially parallel to the first surface. The openings are substantially perpendicular to the longitudinal axis, with each of the openings being configured to receive a plant or a plant receptacle. A first arm extends outwards from the first surface of the base proximate the first end of the base, with the first arm substantially perpendicular to the longitudinal axis of the base, and a second arm extends outwards from the first surface of the base proximate the second end of the base, with the second arm substantially perpendicular to the longitudinal axis of the base.

In some embodiments plant receptacles, to hold the plants, are in the openings defined through the base. In some embodiments the plant receptacles include a housing with opposing openings, with one opening larger than the other. Roots of the plant may extend into an aqueous environment through the smaller opening, with the plant canopy extending above the larger opening.

In some embodiments, each plant receptacle may include a body having a first surface, a second surface, and a sidewall with an opening defined through the body from the first to the second surface along a longitudinal axis of the body. A collar on the first surface of the body may have a ledge. The ledge may extend outward from the opening in a plane that is a substantially perpendicular to the longitudinal axis of the body and protrude past the outer surface of the sidewall of the body. A sidewall of the collar may protrude outward from the first surface of the body to define an enclosure around the opening and ledge.

In accordance with some embodiments, the plant receptacle further includes one or more wings that extend outward from the sidewall of the collar. In accordance with many of these embodiments, a first wing may extend outward from a first side of the sidewall of the collar and a second wing may extend outward from a second side of the collar opposite the first side. In accordance with a number of these embodiments, the collar of the plant receptacle has a niche defined in the outer sidewall of the collar under at least one of the first and second wing proximate the ledge of the collar.

In accordance with some embodiments, the plant receptacle may include a root sheath. The root sheath may have a sidewall that extents outward from the bottom surface of the body substantially parallel to the longitudinal axis of the body to surround the opening through the bottom surface of the body. In accordance with many of these embodiments, the root sheath may also have a coupling ledge that extends between the sidewall of the body and the sidewall of the sheath along the bottom surface of the body in a plane substantially perpendicular to the longitudinal axis of the body. In accordance with a number of these embodiments, a bottom surface of the root sheath has a first side that extents towards the base of the receptacle in a first plane that forms an acute angle with respect to the longitudinal axis of the plant receptacle. In accordance with a few of these embodiments, the bottom surface of the root sheath may have a second side that extents towards the base of the receptacle in a second plane that forms an acute angle with respect to the longitudinal axis of the plant receptacle.

In accordance with some embodiments, a grow wall may be a wall having a first side surface and a second side surface with openings defined through the wall from the first side surface to the second side surface. Each of the openings may be configured to receive a plant receptacle. In accordance with many of these embodiments, a wall coupling configured to receive a bottom side of the bracket assembly surrounding one of the plurality of openings in the bracket assembly and/or a plant receptacle may be placed in and/or around an opening in the wall. In accordance with a number of these embodiments, the wall coupling may include a base having a top surface and a bottom surface with an opening defined through the base from the first surface to a second surface. A hood may protrude out of the base over the opening with a surface extending in a plane that forms an acute angle with a plane of the top surface of the base and an opening defined through the hood from the surface to the opening through the base.

These and other embodiments in accordance with aspects of the invention are more fully comprehended on review of this disclosure.

### BRIEF DESCRIPTION OF THE FIGURES

Figure 1 illustrates portions of an aqueous growing system in accordance with aspects of the invention.
Figure 2 is a perspective view of a grow wall in accordance with an embodiment of the invention.
Figure 3 is a bottom perspective view of a bracket which does not form part of the claimed invention.
Figure. 4 is a top perspective view of the bracket shown in Figure 3.
Figure 5 is a top view of the bracket shown in Figure 3.
Figure 6 is a side perspective view of the bracket shown in Figure 3.
Figure 7 is a top front perspective view of a bracket with legs in accordance with the invention.
Figure 8 is a top front perspective view of the bracket of Figure 7, with plant receptacles installed, in accordance with an embodiment of the invention.
Figure 9 is a front perspective view of a plant receptacle in accordance with an embodiment of the invention.
Figure 10 is a rear perspective view of the plant receptacle of Figure 7.
Figure 11 is a top perspective view of a wall coupling in accordance with an embodiment of the invention.

### DETAILED DESCRIPTION

Large scale aqueous farm systems such as, but not limited to, aeroponic farm systems may include grow walls. For an aeroponic farm, the grow walls typically are part of an enclosure for a mist environment. A grow wall may have openings in which plants are placed, with root systems of the plants extending into the mist environment and a canopy of the plant extending out into an atmospheric environment. The grow wall therefore serves as a barrier or separation between an aqueous environment and an atmospheric environment. In some embodiments barriers or separations other than grow walls may be used, and in some embodiments the aqueous farm system may be a hydroponic farm system.

In some embodiments the plants are placed in plant receptacles, which in turn are placed in the openings of the grow walls. Generally, the root systems of the plants extend out of one end of the plant receptacles, and the canopy of the plant extends out another end of the plant receptacle. The plant receptacle may be coupled to the wall in a way that seals the mist environment inside the wall.

A bracket in accordance with some embodiments of the invention may be an assembly may be used to handle the plant receptacles. Particularly, the bracket may include a portion positioned between a barrier, for example a grow wall, and part of a plurality of plant receptacles. The bracket may be used to remove a group of one or more plant receptacles from the grow wall. In accordance with the invention the bracket has multiple holes or housings in a longitudinal base of the bracket that each hold or affix to a plant receptacle, and arms extending from the base of the bracket that allow the bracket to be handled away from the canopies and/or roots protruding out the receptacles. The arms are at opposing ends of a longitudinal base of the bracket. The arms of the bracket may be handles that extend out from the opposite sides of the bracket that may be grasped away from the canopies or roots of the receptacles in some embodiments.

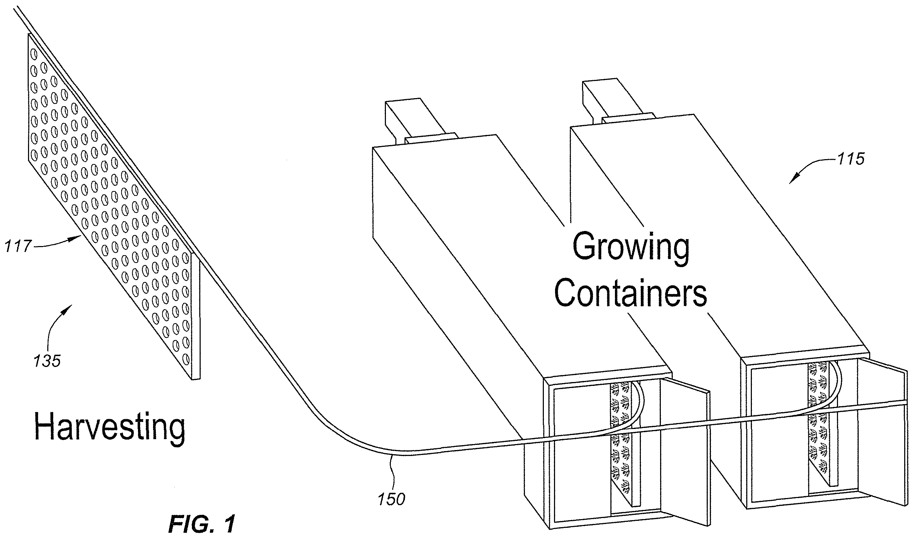

Figure 1 illustrates a portion of large scale aeroponic farm that is representative of an aqueous farm system in accordance with some embodiments of the invention. The large scale aeroponic farm includes growing containers 115, and a harvesting station 135. Generally, a climate and/or aqueous circulation control systems (not shown) may be used in providing appropriate environmental conditions within the growing containers or parts thereof. As illustrated, the growing containers and harvesting station are connected by an overhead track system 150.

In Figure 1, the plants are housed in plant receptacles. The plant receptacles are placed in grow walls, for example grow wall 117, that may be comprised of multiple grow panels. In the embodiment of Figure 1, each grow wall has one or more couplings that affix the grow wall to the track system. The track system may be used to move the grow walls from the growing containers to the harvesting station. After the plants in the growing containers have matured and are ready to be harvested, the grow wall is moved to the harvesting station. A more detailed description some components of an aeroponic farm system that uses grow walls and plant receptacles in accordance with some embodiments of the invention is provided in U. S. Patent Application No. 15/360,876 entitled "Plant Growing Systems and Methods" filed November 23, 2016.

Aqueous farm systems, including aeroponic farm systems, in accordance with some embodiments of this invention allow automated retrieval of plants from a growing wall using a bracket. The bracket may allow multiple plant receptacles in a growing wall to be engaged by an automated system at one time for handling. Furthermore, the configuration of the bracket may reduce and/or prevent contact between the automated system and plant canopies of the plants in the receptacles to reduce and/or prevent damage to the plants.

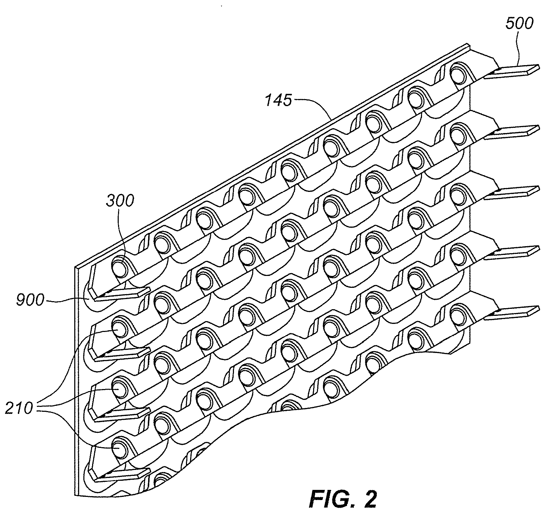

Figure 2 illustrates a portion of a panel of a grow wall with brackets in accordance with aspects of the invention. The panel may be part of a structure that encloses an aqueous environment, for example a mist of an aeroponic environment. The grow wall has plant receptacles in openings of the wall, with brackets holding the plant receptacles. Roots of the plants would be exposed in the aqueous environment out one end of the plant receptacle, with a canopy of the plant exposed to an external atmospheric environment out the other end of the plant receptacle.

In Figure 2, a panel 145 of a grow wall has openings 210 defined through wall 145. In accordance with the shown embodiment, openings 210 are configured in an array of rows and columns. However, various other embodiments may have the openings 210 configured in wall 145 in other arrangements. In some embodiments, and in the embodiment of Figure 2, a wall coupling 900 surrounds each opening 210 through wall 145, and the wall coupling is configured to receive a plant receptacle 300 being held by a bracket 500. In accordance with some embodiments, a wall coupling 900 may be configured to hold a plant receptacle in a given orientation with respect to wall 145. In accordance with many embodiments, a portion of a wall coupling 900 is inserted into an opening 210 to hold the wall coupling in place.

Each bracket 500 is between, or in some embodiments partially between, the plant receptacles 300 and wall couplings 900. In accordance with the shown embodiment, each bracket 500 holds a row of plant receptacles 300. In accordance with some other embodiments, each bracket holds a portion of a row of plant receptacles. In accordance with some other embodiments, each bracket 500 holds plant receptacles 300 in a same column. In a number of other embodiments, each bracket 500 holds a certain number of plant receptacles 300 in particle rows and columns forming a particular polygonal shape such as, but not limited to, a square and a rectangle. Each bracket 500 includes one or more couplings that allow an automated movement device to couple to an assembly bracket assembly 500 to insert and/or remove the plant receptacles from the openings 210 in wall 145.

Bracket assemblies 500, plant receptacles 300, and wall couplings 900 in accordance with various embodiments of the invention are described in more detail below.

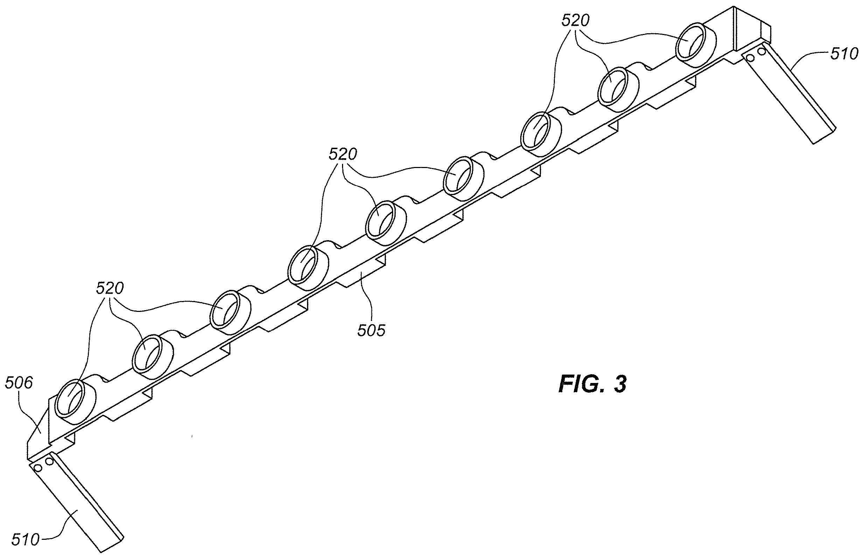

In accordance with some embodiments of the invention, a bracket assembly is provided for use in the automated handling of plants. The bracket holds a group of one or more plant receptacles and allows an automated system to couple to the bracket in a manner that does not interfere with the exposed plant canopies and/or root systems of the plants housed in the receptacles. This allows an automated system to handle the plant receptacles to safely insert and/or remove the receptacles from the growing as well as transport the plant receptacles, and plants held by the plant receptacles, outside the grow wall. Various views of a bracket in accordance with an embodiment of the invention are shown in Figures 3-8.

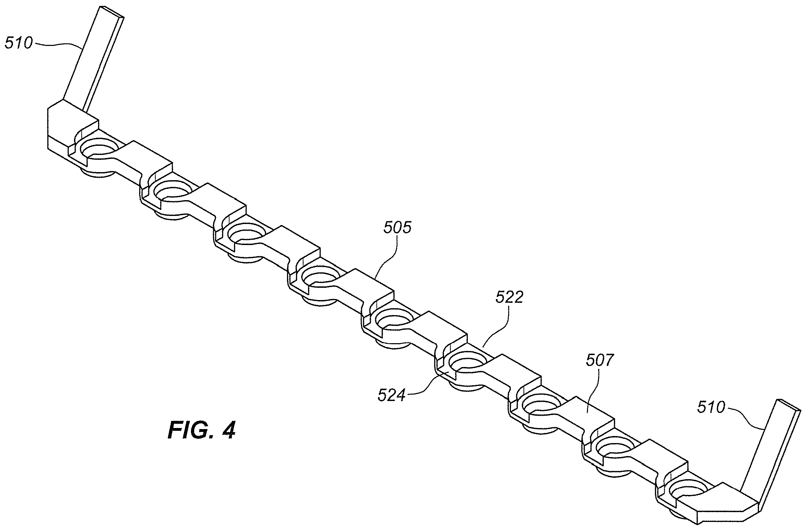

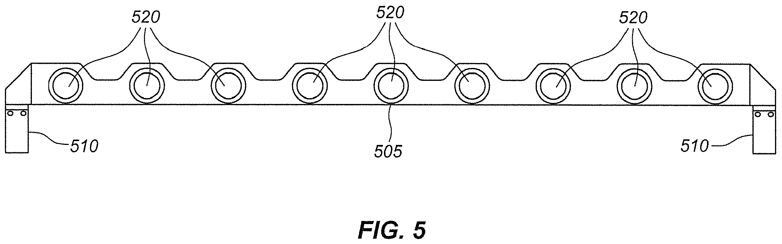

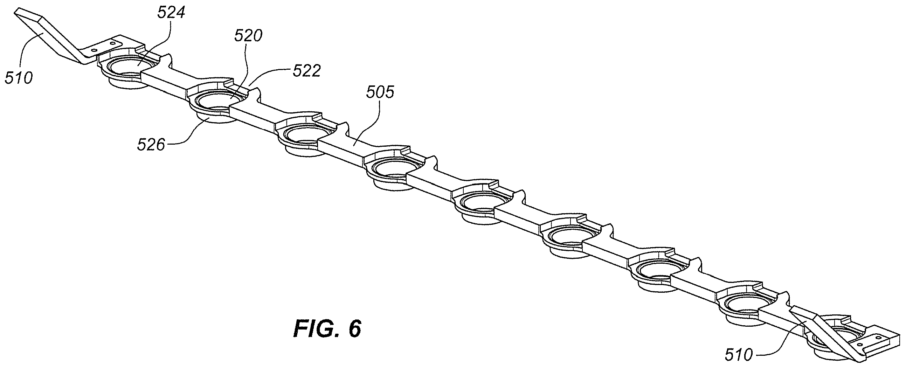

Figure 3 is a bottom perspective view of a bracket which does not form part of the invention. Figure. 4 is a top perspective view of the bracket shown in Figure 3. Figure 5 is a top view of the bracket shown in Figure 3. Figure 6 is a side perspective view of the bracket shown in Figure 3. Bracket 500 has a base 505. Base 505 extends along a longitudinal axis from a first end to a second end with a top surface and a bottom surface. In the shown embodiment, the base is rectangular. However, base 505 may be various other shapes in accordance with various other embodiments of the invention. Openings 520 are defined through base 505 from the top surface to the bottom surface substantially perpendicular to the longitudinal axis. In the shown embodiments, openings 520 are substantially circular. However, openings 520 may be various other shapes in accordance with various other embodiments of the invention.

In accordance with the shown embodiment, base 505 has sufficient length and width to have an opening for a corresponding opening in a single row of openings in a grow wall. In accordance with some other embodiments, base 505 may have sufficient length for a lesser number of openings in a row. In accordance with many embodiments, base 505 may also have a sufficient width for openings corresponding to two or more openings of a grow wall in a column. Each opening 530 is configured to receive one plant receptacle. However, the openings 530 in accordance with a number of embodiments may be configured to receive more than one plant receptacle.

Bracket 500 has a coupling system that allows an automated system to couple to the bracket with interfering with the canopies and/or root system exposed by plant receptacles affixed to the assembly. In accordance with the invention, the coupling system is a pair of arms 510 that extend out of opposing end of base 505. A first arm 510 extends outwards from the top surface of base 505 proximate the first end of base 505 at a substantially perpendicular angle to the longitudinal axis of the base and a second arm 510 extends outwards from the top surface of base 505 proximate the second end of base 505 at a substantially perpendicular angle to the longitudinal axis of the base. Each arm may be gripped by a robotic arm, clap, or other gripping device so that the automated system may move the bracket 500 and in turn the plant receptacles (and plants held therein) using an automated system. In accordance with some other embodiments, slots may be defined in the opposing ends to allow a fork, rod, or some other device with an extended shaft to be inserted into the slot to move the bracket 500. In the shown embodiment, the arms 510 extend outward from base 505 at an acute angle with respect to the top surface of base 505 to facilitate handling when bracket 500 is affixed to plant receptacles 300 that are inserted in the growing wall. However, brackets in accordance with various other embodiments may have arms that extend outward at other angles.

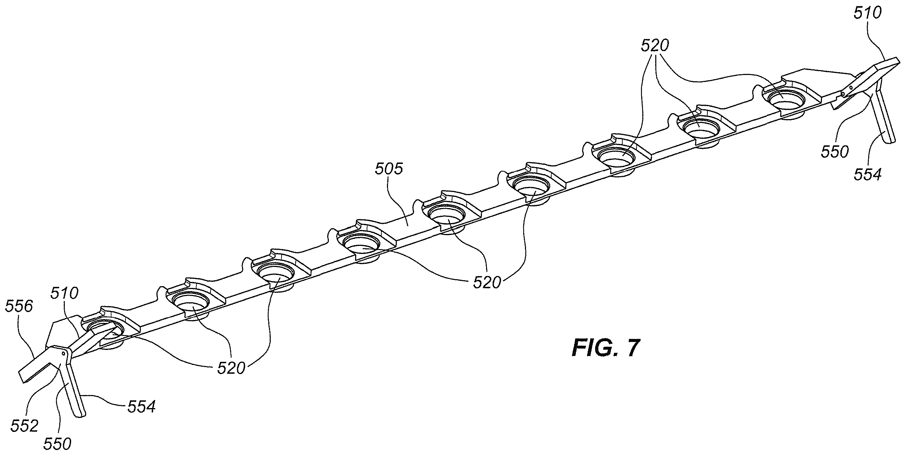

A collar coupling 522 surrounds each of the openings 520 in base 505. The collar couplings 522 cooperates with the collar 310 of a plant receptacle 300 (for example as shown in Figures 7-8) to align and/or secure a plant receptacle 300 in a desired orientation in the opening 520. In the shown embodiment, a collar coupling 522 is defined in the top surface of base 505 over one of the openings 520. Each collar coupling 522 has a ledge within base 505 that extends substantially perpendicularly from an edge of the opening 520 to a sidewall and the sidewall extends to the top surface of base 505.

Each collar coupling 522 may have one or more recessed notches that receive one or more corresponding wings 312 of a plant receptacle 300. In the shown embodiment, notches 524 are defined in each collar coupling 522. Each notch 524 is a void defined within the top surface and a portion of the sidewall of base 505 in a shape designed to receive a wing that extends out of a side of a plant receptacle.

A wall coupling collar 526 surrounds an opening on the bottom surface of base 505 and is configured to fit within an opening of wall coupling 900. In the shown embodiment, each wall coupling collar 526 extends out of the bottom surface of base 505 and is a sidewall that surrounds one of the openings 520 through base 505.

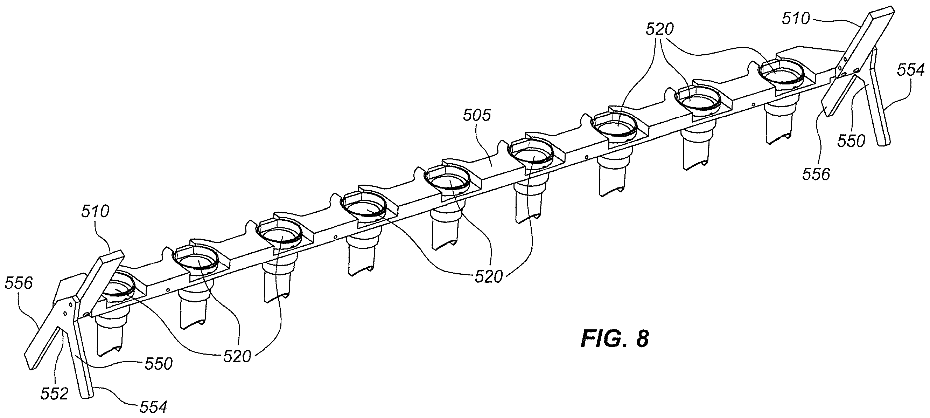

In accordance with the invention, the bracket includes legs for standing the bracket on a surface. A bracket with leg in accordance with an embodiment of the invention is shown in Figures 7 and 8. In the embodiment of Figures 7 and 8 legs 550 are connected to opposing ends of base 505. In the shown embodiment, the leg assemblies 550 are affixed to the sidewalls of the opposing ends of bracket 500. However, leg assemblies 550 may be attached to other portions of base 505 in accordance with various other embodiments of the invention. Furthermore, the legs may be retractable and/or detachable in accordance with some other embodiments of the invention, and in some embodiments the legs may be integrally formed with the bracket.

In Figures 7 and 8 two legs 554, 556 extend in different directions from a common location, creating a y-like formation. The legs may be considered co-planar, namely extending in and defining a common plane, with direction of extension of the legs differing by for example sixty degrees (although in various embodiments this may instead be in the range of thirty degrees to one hundred twenty degrees). Installed on opposing sides of the base 505 of the bracket, as shown in Figures 7 and 8, the legs 254, 256 may be considered to extend downward from a bottom side of a bracket with the bottom ends, or feet, of each of the legs 254, 256 resting on a surface and providing support to the bracket. As shown in Figure 8, the legs may have a sufficient length to allow the bracket to be placed on a surface with plant receptacles installed in the bracket. In accordance with some further embodiments, the legs may have a sufficient length to allow plant the bracket to be placed on a surface without root systems extending from the bottom of installed plant receptacles touching or minimally touching the surface. The legs may provide benefit, therefore, in allowing a bracket holding mature plants to be stably placed on a floor or other surface without damage to the plants (or their fruit) by contact with the floor.

Although brackets in accordance with various embodiments of the invention are described above with reference to Figures 3-8, other brackets or bracket assemblies that add, combine, modify, and/or combine components as required by the configuration particular aqueous farm systems in accordance with various other embodiments are possible.

A plant receptacle generally holds in place a plug including a plant in an aeroponic system. The root system of the plant may be exposed through an opening on one side of the receptacle and a canopy of the plant that includes the stem leaf and other portion of the plant may be exposed through a second side. In accordance with some embodiments of the invention, a plant receptacle fits into an opening in a grow wall such that the root system of the plant is exposed inside a mist environment at least partially defined by the grow wall.

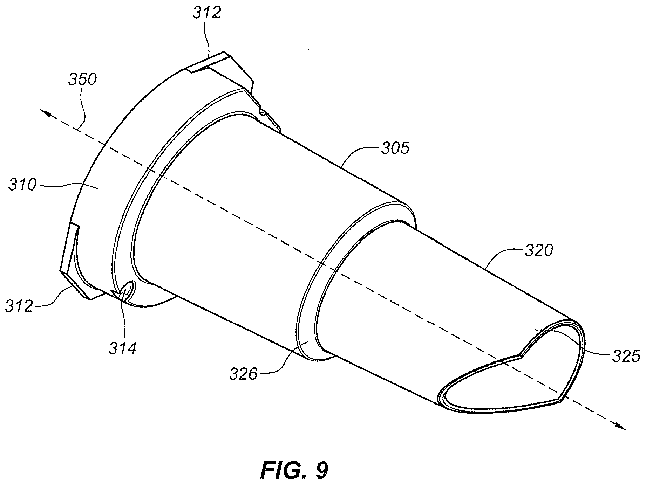

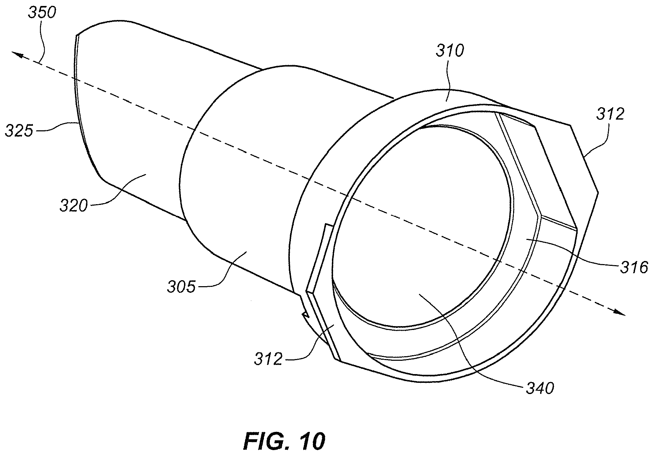

Figure 9 illustrates a rearward perspective view of a plant receptacle in accordance with an embodiment of the invention. Figure 10 illustrates a forward perspective view of the plant receptacles of Figure 9. The plant receptacle 300 includes a body 305 that holds a plug in place in receptacle 300. Body 305 may include internal components that are used to hold the plug and/or plant in place. Examples of these internal components for holding a plant and/or plug in place include, but are not limited to, an annulus, a retaining ring, a detent, and a tongue, for example those that are described in the previously mentioned U. S. Patent Application No. 15/360,876 entitled "Plant Growing Systems and Methods" filed November 23, 2016.

Base 305 has a top surface, a bottom surface, and a sidewall as well as a longitudinal axis 350. An opening 340 is defined through the body 305 from the top surface to the bottom surface along longitudinal axis 350. In accordance with the shown embodiment, opening 240 and base 205 are substantially cylindrical. However, base 305 and/or opening 316 may be other volumetric shapes in accordance with various other embodiments of the invention.

A collar 310 on the top surface of body 305 has a ledge 316 and a sidewall. Ledge 316 extends outward from the edge of opening 310 proximate the top surface of body 305 in a plane substantially perpendicular to longitudinal axis 350 and protrudes past the outer surface of the sidewall of body 305. The sidewall of collar 310 protrudes outward from the top surface of ledge 316 at or proximate the outer edge of ledge 216 to define an enclosure around opening 340 of base 205. In the shown embodiment, the sidewall of collar 310 is substantially cylindrical with two flat substantially parallel portions on opposing sides of plant receptacle 300. However, the sidewall of collar 310 may have other shapes in accordance with various other embodiments of the invention. The flat portions of the sidewall cooperate with components of bracket assembly 500 to align a plant receptacle 300 in a desired orientation within an opening of bracket assembly 500 in accordance with some embodiments of the invention.

In addition, plant receptacle 300 includes wings 312 that extent outward from the sidewall of collar 310 at substantially the top surface of collar 310. In accordance with the shown embodiments, the wings 312 extend out from collar 310 at or proximate the flat portions of the sidewall. The wings 312 may be used for handling of the receptacle; for aligning plant receptacle 300 in an opening in the bracket 500; and/or for purposes of coupling plant receptacle 300 to bracket 500 and/or wall coupling 900. In accordance with various other embodiments, the collar 310 may have any number of wings configured in any other fashion.

One or more niches 314 are defined on a bottom outer surface of ledge 316 for use in aligning and/or coupling plant receptacle 300 to bracket assembly 500 and/or wall coupling 900. In accordance with the shown embodiment, a niche 314 is aligned under a center point of a wing 312. However, one or more niches 314 may be in any location along the ledge 316 and/or sidewall of collar 310 in accordance with various other embodiments of the invention.

A root sheath 320 extends out of the bottom surface of base 305 surrounding opening 240. The root sheath 320 covers a portion of the root system and allows the remainder of the root system to be exposed out of the bottom of the opening 340. Root sheath 320 has a sidewall that extends outwardly from the bottom surface of body 305 substantially parallel to the longitudinal axis 350 of the body surrounding opening 340 on the bottom surface of the body 305. A coupling ledge 326 extends between the sidewall of body 305 and the sidewall of root sheath 320 along the bottom surface of body 305 in a plane that is substantially perpendicular to longitudinal axis 350. The coupling ledge 326 may be used to hold the plug in place inside base 305; to align plant receptacle 300 with bracket assembly 500 and/or wall coupling 900; and/or to couple plant receptacle 300 to bracket assembly 500 and/or wall coupling 900. In accordance with the shown embodiment, root sheath 320 is substantially cylindrical in shape. However, root sheath 320 may be any other volumetric shape in accordance with various other embodiments of the invention.

A bottom surface 325 of root sheath 320 has one or more sloped sides to make the opening defined in the bottom surface of sheath 320 larger. The larger opening in the bottom surface allows for increased expose of the root system of the plant to a mist environment, as well as shields the root system from dripping water from plants or other structures above. In accordance with the shown embodiment, bottom surface 325 has a first side that extends towards base 305 of the receptacle 300 in a first plane that forms an acute angle with respect to the longitudinal axis 350 of plant receptacle 300 and a second side that extends towards base 305 of the receptacle 300 in a second plane that forms an acute angle with respect to the longitudinal axis 350 of the plant receptacle 300.

Although plant receptacles in accordance with various embodiments of the invention are described with respect to Figures 9-10, plant receptacles that add, combine, modify, and/or remove components in accordance with various other embodiments are possible.

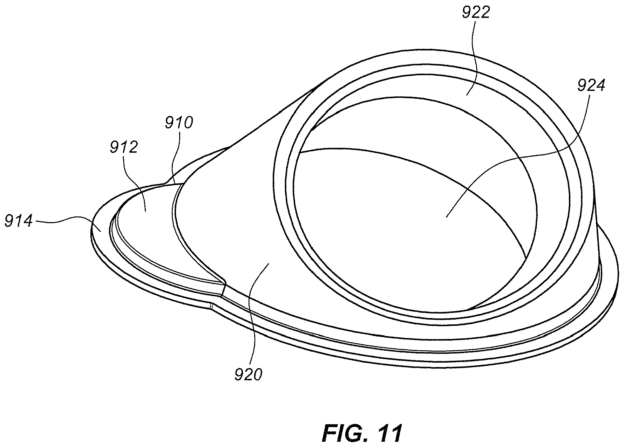

In accordance with some embodiments of the invention, a wall coupling is affixed to the growing wall over each opening 210 to align a plant receptacle in a desired orientation that extends through the opening 210. The wall coupling may cooperate with the plant receptacles and/or bracket assembly to secure the plant receptacles and/or bracket in place in the desired orientation within the openings 210. A wall coupling in accordance with an embodiment of the invention is shown in Figure 11.

A wall coupling includes a base 910 and a hood 920. Base 910 has a top surface and a bottom surface with an opening defined through base 910 from the top surface to the bottom surface. In the shown embodiment, base 910 and the opening through base 910 are circular. However, base 910 and/or the opening through base 910 may be other shapes in accordance with various other embodiments of the invention.

A hood 920 protrudes out of the top surface of base 910 over the opening. Hood 920 has a surface in a plane that forms an acute angle with a plane of the top surface of base 910 and an opening 924 defined through hood 920 from the surface to the opening through base 910. A ledge 922 is defined within the sidewall of opening 924.

Ledge 922 cooperates with a ledge on the bottom of a planted receptacle 300 and/or a coupling collar in bracket assembly 500 to orient a plant receptacle and/or bracket assembly 500 at a proper depth within opening 924. The angle of the surface with respect to the base 910 causes the opening through wall coupling 900 to be at a desired angle with respect to the plane of a growing wall such that when a plant receptacle and/or bracket assembly is inserted into opening 924 , the plant receptacle is in the desired orientation. In addition, base 910 includes wings 912 of material on the tope surface of base 910 on opposing sides of hood 920 to add structural support.

Although wall couplings in accordance with various embodiments of the invention are described above with respect to Figure 11, other wall couplings that add, combine, modify, and/or combine components as required by the configuration of aqueous farm systems in accordance with various other embodiments are possible.

## Claims

1. A bracket (500) for use in holding plants in an aqueous farm system, comprising:
a base (505) that extends along a longitudinal axis from a first end to a second end, the base having a first surface and a second surface, the second surface parallel to the first surface;
a plurality of openings (520) through the base (505), from the first surface of the base (505) to the second surface of the base (505), substantially perpendicular to the longitudinal axis, each of the plurality of openings (520) configured to receive a plant receptacle (300) holding a plant;
a first arm (510) extending outwards from the first surface of the base (505) proximate the first end of the base, with the first arm substantially perpendicular to the longitudinal axis of the base;
a second arm (510) extending outwards from the first surface of the base (505) proximate the second end of the base, with the second arm substantially perpendicular to the longitudinal axis of the base; **characterized by** further comprising:
a first pair of legs (550) and a second pair of legs (550) extending from the base (505).

2. The bracket of claim 1 wherein the base has a plurality of collar couplings (522) defined in a top surface of the base, each of the plurality of collar couplings (522) being defined over one of the plurality of openings and having a ledge within the base that extends from an edge of the opening to a sidewall that extends from the ledge to the top surface of the base and each of the plurality of collar couplings (522) is configured to receive a collar (310) of a one of the plant receptacles.

3. The bracket of claim 2 wherein the base has a plurality of notches (524) defined in the plurality of collar coupling where each of the plurality of notches (524) is a void defined with in the top surface and a portion of the sidewall that is configured to receive a wing guide (312) that extends out of a side of the one of the plant receptacles.

4. The bracket of claim 1 wherein the base has a plurality of wall coupling collars (526) that extend outward from a bottom surface of the base, wherein each of the plurality of wall coupling collars (526) comprises a sidewall that surrounds one of the plurality of opening through the base.

5. The bracket of any of claims 1 to 4, wherein the first arm and the second arm extend outward from the first surface of the base at an acute angle with respect to the first surface of the base.

6. The bracket of any of claims 1 to 5, wherein the legs of each pair extend from a common location, creating a Y-like configuration.

7. A plant holding assembly for an aqueous farm system, comprising:
a bracket according to claim 1; and
the plant receptacles, the plant receptacles including:
a body (305) having a top surface, a bottom surface, and a sidewall with an opening (340) defined through the body (305) from the top surface to the bottom surface along a longitudinal axis of the body (305); and
a collar on the top surface of the body having a ledge (316) that extends outward from the opening in a plane substantially perpendicular to the longitudinal axis and protrudes past the outer surface of the sidewall of the body (305) and a sidewall of the collar that protrudes outward from a top surface of the ledge (316) to define an enclosure around the opening.

8. The plant holding assembly of claim 7, wherein the first arm and the second arm extend outward from the first surface of the base at an acute angle with respect to the first surface of the base.

9. The plant holding assembly of any of claims 7 and 8, wherein the legs of each pair extend from a common location, creating a Y-like configuration.

10. A grow wall (117) for an aqueous farm system, comprising:
a plant holding assembly according to claim 5; and
a wall (145) having a first side surface and a second side surface with a plurality openings (210) through the wall (145) from the first side surface to the second side surface wherein each of the plurality of openings (210) is configured to receive a one of the plant receptacles.

11. The grow wall of claim 10, wherein the first arm and the second arm extend outward from the first surface of the base at an acute angle with respect to the first surface of the base.

12. The grow wall of any of claims 10 and 11, wherein the legs of each pair extend from a common location, creating a Y-like configuration.

## Patentansprüche

1. Halterung (500) zur Verwendung beim Halten von Pflanzen in einem Wasserfarmsystem, umfassend:
eine Basis (505), die sich entlang einer Längsachse von einem ersten Ende zu einem zweiten Ende erstreckt, wobei die Basis eine erste Oberfläche und eine zweite Oberfläche aufweist, wobei die zweite Oberfläche parallel zu der ersten Oberfläche ist;
eine Vielzahl von Öffnungen (520) durch die Basis (505), von der ersten Oberfläche der Basis (505) zu der zweiten Oberfläche der Basis (505), im Wesentlichen senkrecht zu der Längsachse, wobei jede aus der Vielzahl von Öffnungen (520) konfiguriert ist, um ein Pflanzgefäß (300) aufzunehmen, das eine Pflanze enthält;
einen ersten Arm (510), der sich von der ersten Oberfläche der Basis (505) nahe dem ersten Ende der Basis nach außen erstreckt, wobei der erste Arm im Wesentlichen senkrecht zu der Längsachse der Basis ist;
einen zweiten Arm (510), der sich von der ersten Oberfläche der Basis (505) nahe dem zweiten Ende der Basis nach außen erstreckt, wobei der zweite Arm im Wesentlichen senkrecht zu der Längsachse der Basis ist;
**dadurch gekennzeichnet, dass** sie ferner Folgendes umfasst:
ein erstes Schenkelpaar (550) und ein zweites Schenkelpaar (550), die sich von der Basis (505) erstrecken.

2. Halterung nach Anspruch 1, wobei die Basis eine Vielzahl von Kragenkopplungen (522) aufweist, die in einer oberen Oberfläche der Basis definiert sind, wobei jede aus der Vielzahl von Kragenkopplungen (522) über einer aus der Vielzahl von Öffnungen definiert ist und eine Leiste innerhalb der Basis aufweist, die sich von einer Kante der Öffnung zu einer Seitenwand erstreckt, die sich von der Leiste zu der oberen Oberfläche der Basis erstreckt, und jede aus der Vielzahl von Kragenkopplungen (522) konfiguriert ist, um einen Kragen (310) von einem der Pflanzgefäße aufzunehmen.

3. Halterung nach Anspruch 2, wobei die Basis eine Vielzahl von Kerben (524) aufweist, die in der Vielzahl von Kragenkopplungen definiert sind, wobei jede aus der Vielzahl von Kerben (524) ein Hohlraum ist, der in der oberen Oberfläche und einem Abschnitt der Seitenwand definiert ist, der konfiguriert ist, um eine Flügelführung (312) aufzunehmen, die sich aus einer Seite von einem der Pflanzgefäße erstreckt.

4. Halterung nach Anspruch 1, wobei die Basis eine Vielzahl von Wandkopplungskragen (526) aufweist, die sich von einer unteren Oberfläche der Basis nach außen erstrecken, wobei jeder aus der Vielzahl von Wandkopplungskragen (526) eine Seitenwand umfasst, die eine aus der Vielzahl von Öffnungen durch die Basis umgibt.

5. Halterung nach einem der Ansprüche 1 bis 4, wobei sich der erste Arm und der zweite Arm von der ersten Oberfläche der Basis in einem spitzen Winkel in Bezug auf die erste Oberfläche der Basis nach außen erstrecken.

6. Halterung nach einem der Ansprüche 1 bis 5, wobei sich die Schenkel von jedem Paar von einer gemeinsamen Stelle erstrecken und eine Y-artige Konfiguration erzeugen.

7. Pflanzenhalteanordnung für ein Wasserfarmsystem, umfassend:
eine Halterung nach Anspruch 1; und
die Pflanzgefäße, wobei die Pflanzgefäße Folgendes beinhalten:
einen Körper (305), der eine obere Oberfläche, eine untere Oberfläche und eine Seitenwand mit einer Öffnung (340) aufweist, die durch den Körper (305) von der oberen Oberfläche zu der unteren Oberfläche entlang einer Längsachse des Körpers (305) definiert ist; und
einen Kragen auf der oberen Oberfläche des Körpers, der eine Leiste (316) aufweist, die sich von der Öffnung in einer Ebene im Wesentlichen senkrecht zu der Längsachse nach außen erstreckt und über die äußere Oberfläche der Seitenwand des Körpers (305) vorsteht, und eine Seitenwand des Kragens, die von einer oberen Oberfläche der Leiste (316) nach außen vorsteht, um eine Umschließung um die Öffnung zu definieren.

8. Pflanzenhalteanordnung nach Anspruch 7, wobei sich der erste Arm und der zweite Arm von der ersten Oberfläche der Basis in einem spitzen Winkel in Bezug auf die erste Oberfläche der Basis nach außen erstrecken.

9. Pflanzenhalteanordnung nach einem der Ansprüche 7 und 8, wobei sich die Schenkel von jedem Paar von einer gemeinsamen Stelle erstrecken und eine Y-artige Konfiguration erzeugen.

10. Wachstumswand (117) für ein Wasserfarmsystem, umfassend:
eine Pflanzenhalteanordnung nach Anspruch 5; und
eine Wand (145), die eine erste Seitenoberfläche und eine zweite Seitenoberfläche mit einer Vielzahl von Öffnungen (210) durch die Wand (145) von der ersten Seitenoberfläche zu der zweiten Seitenoberfläche aufweist, wobei jede aus der Vielzahl von Öffnungen (210) konfiguriert ist, um eines der Pflanzgefäße zu empfangen.

11. Wachstumswand nach Anspruch 10, wobei sich der erste Arm und der zweite Arm von der ersten Oberfläche der Basis in einem spitzen Winkel in Bezug auf die erste Oberfläche der Basis nach außen erstrecken.

12. Wachstumswand nach einem der Ansprüche 10 und 11, wobei sich die Schenkel von jedem Paar von einer gemeinsamen Stelle erstrecken und eine Y-artige Konfiguration erzeugen.

## Revendications

1. Support (500) destiné à être utilisé pour contenir des plantes dans un système agricole aqueux, comprenant :
une base (505) qui s'étend le long d'un axe longitudinal d'une première extrémité à une seconde extrémité, la base ayant une première surface et une seconde surface, la seconde surface étant parallèle à la première surface ;
une pluralité d'ouvertures (520) à travers la base (505), de la première surface de la base (505) à la seconde surface de la base (505), sensiblement perpendiculaires à l'axe longitudinal, chacune de la pluralité d'ouvertures (520) configurée pour recevoir un réceptacle de plante (300) contenant une plante ;
un premier bras (510) s'étendant vers l'extérieur depuis la première surface de la base (505) à proximité de la première extrémité de la base, avec le premier bras sensiblement perpendiculaire à l'axe longitudinal de la base ;
un second bras (510) s'étendant vers l'extérieur depuis la première surface de la base (505) à proximité de la seconde extrémité de la base, avec le second bras sensiblement perpendiculaire à l'axe longitudinal de la base ;
**caractérisé en ce qu'**il comprend en outre :
une première paire de pattes (550) et une seconde paire de pattes (550) s'étendant depuis la base (505).

2. Support selon la revendication 1, dans lequel la base a une pluralité d'accouplements à collier (522) définis dans une surface supérieure de la base, chacun de la pluralité d'accouplements à collier (522) étant défini sur l'une de la pluralité d'ouvertures et ayant un rebord à l'intérieur de la base qui s'étend d'un bord de l'ouverture à une paroi latérale qui s'étend du rebord à la surface supérieure de la base et chacun de la pluralité d'accouplements à collier (522) est configuré pour recevoir un collier (310) de l'un des réceptacles de plante.

3. Support selon la revendication 2, dans lequel la base a une pluralité d'encoches (524) définies dans la pluralité d'accouplements à collier où chacune de la pluralité d'encoches (524) est un vide défini avec dans la surface supérieure et une partie de la paroi latérale qui est configurée pour recevoir un guide d'aile (312) qui s'étend à l'extérieur d'un côté de l'un des réceptacles de plante.

4. Support selon la revendication 1, dans lequel la base a une pluralité de colliers d'accouplement mural (526) qui s'étendent vers l'extérieur à partir d'une surface inférieure de la base, dans lequel chacun de la pluralité de colliers d'accouplement mural (526) comprend une paroi latérale qui entoure l'une de la pluralité d'ouverture à travers la base.

5. Support selon l'une quelconque des revendications 1 à 4, dans lequel le premier bras et le second bras s'étendent vers l'extérieur depuis la première surface de la base selon un angle aigu par rapport à la première surface de la base.

6. Support selon l'une quelconque des revendications 1 à 5, dans lequel les pattes de chaque paire s'étendent à partir d'un emplacement commun, créant une configuration en forme de Y.

7. Ensemble pour contenir des plantes dans un système agricole aqueux, comprenant :
un support selon la revendication 1 ; et
les réceptacles de plante, les réceptacles de plante comprenant :
un corps (305) ayant une surface supérieure, une surface inférieure et une paroi latérale avec une ouverture (340) définie à travers le corps (305) de la surface supérieure à la surface inférieure le long d'un axe longitudinal du corps (305) ; et
un collier sur la surface supérieure du corps ayant un rebord (316) qui s'étend vers l'extérieur depuis l'ouverture dans un plan sensiblement perpendiculaire à l'axe longitudinal et fait saillie au-delà de la surface externe de la paroi latérale du corps (305) et une paroi latérale du collier qui fait saillie vers l'extérieur à partir d'une surface supérieure du rebord (316) pour définir une enceinte autour de l'ouverture.

8. Ensemble pour contenir des plantes selon la revendication 7, dans lequel le premier bras et le second bras s'étendent vers l'extérieur depuis la première surface de la base selon un angle aigu par rapport à la première surface de la base.

9. Ensemble pour contenir des plantes selon l'une quelconque des revendications 7 et 8, dans lequel les pattes de chaque paire s'étendent à partir d'un emplacement commun, créant une configuration en forme de Y.

10. Mur de culture (117) pour un système agricole aqueux, comprenant :
un ensemble pour contenir des plantes selon la revendication 5 ; et
un mur (145) ayant une première surface latérale et une seconde surface latérale avec une pluralité d'ouvertures (210) à travers le mur (145) de la première surface latérale à la seconde surface latérale dans lequel chacune de la pluralité d'ouvertures (210) est configurée pour recevoir l'un des réceptacles de plante.

11. Mur de culture selon la revendication 10, dans lequel le premier bras et le second bras s'étendent vers l'extérieur depuis la première surface de la base selon un angle aigu par rapport à la première surface de la base.

12. Mur de culture selon l'une quelconque des revendications 10 et 11, dans lequel les pattes de chaque paire s'étendent à partir d'un emplacement commun, créant une configuration en forme de Y.
